# EUROPÄISCHE PATENTSCHRIFT

(11) **EP 0 780 956 B1**
(45) Veröffentlichungstag und Bekanntmachung des Hinweises auf die Patenterteilung: **30.06.1999**
(21) Anmeldenummer: 96203403.9
(22) Anmeldetag: 02.12.1996
(51) Int. Cl.: H02K 7/06

(54) **Dauermagnetläufer für Klauenpolschrittmotor**
Permanent magnet rotor for claw-pole stepping motor
Rotor à aimants permanents pour moteur pas-à-pas à pôles à griffes

(30) Priorität: 21.12.1995 DE 19547895
(43) Veröffentlichungstag der Anmeldung: 25.06.1997
(73) Patentinhaber: Philips Patentverwaltung GmbH, 22335 Hamburg (DE); Koninklijke Philips Electronics N.V., 5621 BA Eindhoven (NL)
(72) Erfinder: Gerling, Dieter, Dr.-Ing., Röntgenstra e 24, 22335 Hamburg (DE)
(74) Vertreter: von Laue, Hanns-Ulrich, Dipl.-Ing.

(56) Entgegenhaltungen:
- EP-A- 0 550 102
- US-A- 5 144 738
- US-A- 5 528 096
- PATENT ABSTRACTS OF JAPAN Bd. 008, Nr. 111 (E-246) 24 Mai 1984 & JP-A-59 025 542 (MATSUSHITA DENKI SANGYO KK) 09 Februar 1984
- PATENT ABSTRACTS OF JAPAN Bd. 012, Nr. 013 (E-573) 14 Januar 1988 & JP-A-62 171 454 (TOYO DENSAN KK) 28 Juli 1987

## Beschreibung

Die Erfindung bezieht sich auf einen Klauenpolschrittmotor mit einem Stator, der wenigstens zwei von Außenkanten begrenzte Statorrückschlußelemente aufweist, in denen jeweils wenigstens eine Statorspule angeordnet ist, und mit einem einen Permanentmagneten aufweisenden Rotor, der mittels wenigstens eines Axiallagers in axialer Richtung gelagert ist, wobei der Rotor ein Innengewinde aufweist, in dem ein Gewindebolzen lagerbar ist.

Ein derartiger Klauenpolschrittmotor ist aus der EP 550 102 A2 bekannt. Klauenpolschrittmotore weisen keine Wickelköpfe auf, und der Stator wird an beiden axialen Enden durch ein Statorrückschlußelement, z.B. ein Statorblech, begrenzt. Deshalb ist bei einem derartigen bekannten Klauenpolschrittmotor die axiale Länge des Permanentmagneten des Rotors kleiner oder gleich der axialen Strecke zwischen den Außenkanten der Statorrückschlußelemente, um die Menge des permanentmagnetischen Materials auf ein Minimum zu beschränken. Ist der Gewindebolzen gegen eine Rotationsbewegung gesichert, so wird eine Rotationsbewegung des Rotors in eine Axialbewegung des Gewindebolzens übertragen. Wird der Gewindebolzen z.B. zu der Betätigung eines Stellorgans verwendet, so wirken auf den Gewindebolzen bei seiner axialen Bewegung axiale Reaktionskräfte in Gegenrichtung ein. Diese axialen Reaktionskräfte können infolge der Lagertoleranzen des Axiallagers eine Verschiebung des Rotors in axialer Richtung hervorrufen. Eine solche axiale Verschiebung des Rotors hat zur Folge, daß der von einer der beiden Statorspulen erzeugte elektromagnetische Fluß nicht mehr komplett mit dem Rotor verkettet ist, wodurch das erzeugte Drehmoment des Motors reduziert wird. Um die axiale Verschiebung des Rotors zu vermeiden, müssen axial sehr steife Lager verwendet werden und der Klauenpolschrittmotor mit einer sehr hohen mechanischen Genauigkeit gefertigt werden. Dies hat hohe Produktionskosten des Motors zur Folge.

Aus der Druckschrift Patent Abstracts of Japan, Bd. 012, Nr. 013 (E- 573) vom 14. Januar 1988 & JP- A- 62 171454 (Toyo Densan K.K.), 28. Juli 1987 ist ein Schrittmotor mit einem Stator und einem einen Permanentmagneten aufweisenden Rotor bekannt. Der Rotor ist mit einem Innengewinde versehen, das mit einem im Motorgehäuse fest verankerten Gewindebolzen zusammenwirkt, wodurch eine Drehbewegung des Rotors in eine lineare Bewegung desselben umgewandelt wird. Die axiale Länge des Rotormagneten übertrifft die des Stators um wenigstens den Hub der Rotorbewegung.

Es ist Aufgabe der Erfindung, einen Klauenpolschrittmotor der eingangs genannten Art zu schaffen, der bei im wesentlichen gleichem Volumen, gleichem Gewicht und gleichem Leistungsverhalten bei axialer Belastung des Gewindebolzens möglichst kostengünstig gefertigt werden kann.

Diese Aufgabe ist erfindungsgemäß dadurch gelöst, daß der Permanentmagnet des Rotors an wenigstens einem axialen Ende über die zugeordnete Außenkante des Statorrückschlußelementes hinausragt, so daß trotz einer gegebenenfalls auftretenden Verschiebung des Rotors infolge der Lagertoleranzen des Axiallagers im wesentlichen das gesamte elektromagnetische Feld der Statorspulen mit dem Rotor verkettet ist.

Die axiale Verlängerung des Permanentmagneten des Rotors über die zugeordnete Außenkante des Statorrückschlußelementes hinaus hat zur Folge, daß eine axiale Verschiebung des Rotors, die nicht größer als die axiale Verlängerung des Permanentmagneten des Rotors ist, keine Reduzierung der elektromagnetischen Kopplung des von den Statorspulen erzeugten Flusses mit dem Rotor und somit keine Verringerung des Drehmomentes bewirkt. Dadurch wird es möglich, den Klauenpolschrittmotor mit einfacheren Lagern auszugestalten, die eine geringere axiale Steifigkeit aufweisen, sowie die Anforderungen an die mechanische Fertigungsgenauigkeit des Klauenpolschrittmotors und der Bauteile des Klauenpolschrittmotors zu vermindern. Diese Maßnahmen führen zu einer bedeutenden Kostenreduzierung, während die axiale Verlängerung des Permanentmagneten des Rotors über die Außenkante des Statorrückschlußelementes hinaus nur geringfügige Mehrkosten hervorruft.

Insgesamt ist es gelungen, einen Klauenpolschrittmotor zu schaffen, der bei gleichem Leistungsverhalten bei axialer Belastung deutlich kostengünstiger zu fertigen ist.

Eine vorteilhafte Ausgestaltung der Erfindung ist dadurch gekennzeichnet, daß der Permanentmagnet des Rotors um wenigstens 5% der Gesamtlänge des Permanentmagneten des Rotors über die zugeordnete Außenkante des Statorrückschlußelementes hinausragt.

Eine Verlängerung in dieser Größenordnung hat sich in der Praxis als besonders vorteilhaft erwiesen.

Eine weitere vorteilhafte Ausgestaltung der Erfindung ist dadurch gekennzeichnet, daß der Permanentmagnet des Rotors an beiden axialen Enden über die zugeordnete Außenkante des Statorrückschlußelementes hinausragt.

Wird der Permanentmagnet des Rotors an beiden Seiten axial verlängert, so kann er auf ein Stellorgan sowohl eine Druckkraft als auch eine Ziehkraft ausüben, ohne daß eine axiale Verschiebung infolge der Lagertoleranzen eine Verringerung des Drehmomentes aufgrund einer geringeren Flußverkettung des Stators mit dem Rotor bewirkt.

Eine weitere vorteilhafte Ausgestaltung der Erfindung ist dadurch gekennzeichnet, daß der Permanentmagnet des Rotors an beiden axialen Enden um wenigstens 5% der Gesamtlänge des Permantmagneten des Rotors über die jeweils zugeordnete Außenkante des Statorrückschlußelementes hinausragt.

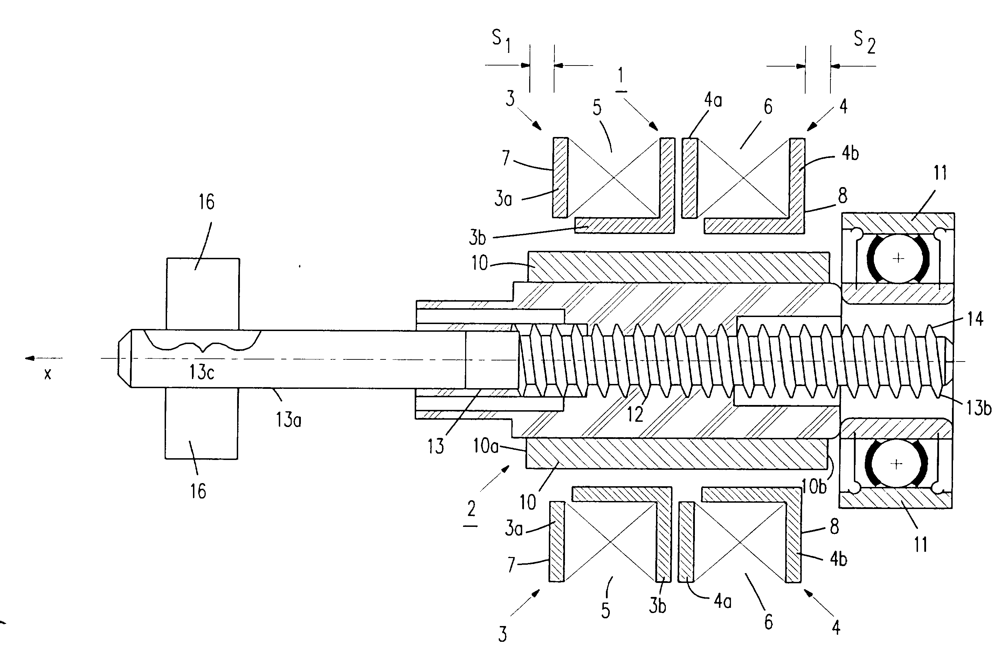

Eine Ausführungsform der Erfindung wird nachfolgend anhand der einzigen Figur der Zeichnung näher erläutert.

Die einzige Figur der Zeichnung zeigt einen Klauenpolschrittmotor mit einem Stator 1 und einem Rotor 2. Der Stator 1 weist ein erstes Statorrückschlußelement 3 und ein zweites Statorrückschlußelement 4 auf. Das erste Statorrückschlußelement 3 weist ein erstes Statorblech 3a und ein zweites Statorblech 3b auf. Das zweite Statorrückshlußelement 4 weist ein drittes Statorblech 4a und ein viertes Statorblech 4b auf. In dem ersten Statorrückschlußelement 3 befindet sich eine erste Statorspule 5. In dem zweiten Statorrückschlußelement 4 befindet sich eine zweite Statorspule 6. Das erste Statorrückschlußelement 3 wird von einer ersten Außenkante 7 begrenzt, das zweite Statorrückschlußelement 4 wird von einer zweiten Außenkante 8 begrenzt.

Der Rotor 2 weist einen Permanentmagneten 10 mit einem ersten axialen Ende 10a und einem zweiten axialen Ende 10b auf. Die axialen Enden 10a und 10b des Permanentmagneten 10 ragen über die zugeordneten Außenkanten 7 bzw. 8 der Statorrückschlußelemente 3 bzw. 4 um eine Strecke S₁ bzw. S₂ hinaus. Der Rotor 2 ist mittels eines Axiallagers 11 gelagert. Der Rotor 2 weist ein Innengewinde 12 auf, in dem ein Gewindebolzen 13 gelagert ist. Der Gewindebolzen 13 besteht aus einem ersten Abschnitt 13a, der ohne Gewinde ausgebildet ist, und aus einem Abschnitt 13b, der ein Gewinde 14 aufweist. Das Gewinde 14 des Gewindebolzens 13 greift in das Innengewinde 12 des Rotors 2 ein. Der Gewindebolzen 13 ist mittels eines Lagerteiles 16 gegen eine Rotationsbewegung gesichert. Dies ist z.B. dadurch möglich, daß das Innere des Lagerteiles 16 auf nicht näher dargestellte Weise quadratisch ausgebildet ist und ein Teilabschnitt 13c des ersten Abschnitts 13a des Gewindebolzens 13 ebenfalls quadratisch ausgebildet und in das quadratisch ausgebildete Innere des Lagerteiles 16 eingepaßt ist. Dies hat zur Folge, daß eine Rotationsbewegung des Rotors 2 in eine axiale Bewegung des Gewindebolzens 13 in positiver oder negativer X-Richtung umgesetzt wird. Wird der Gewindebolzen 13 beispielsweise in positiver X-Richtung bewegt und muß er bei dieser axialen Bewegung in positiver X-Richtung eine Kraft aufbringen, z.B. um ein Stellorgan zu betätigen, so wirkt auf den Gewindebolzen 13 eine Reaktionskraft in negativer X-Richtung ein, die von dem Axiallager 11 aufgefangen werden muß. Das Axiallagers 11 weist jedoch je nach Qualität des Axiallagers 11 ein gewisses Lagerspiel auf. Dies kann dazu führen, daß sich der Rotor 2 um den Betrag des Lagerspiels des Axiallagers 11 in negativer X-Richtung verschiebt. Diese axiale Verschiebung des Rotors 2 in negativer X-Richtung hat jedoch keine Verringerung der elektromagnetischen Verkopplung des von den Statorspulen 5 und 6 erzeugten elektromagnetischen Flusses mit dem Permanentmagneten 10 des Rotors 22 zur Folge, solange diese axiale Verschiebung in negativer X-Richtung kleiner ist als die Strecke S₁, um die der Permanentmagnet 10 über die Außenkante 7 des Stators 1 hinausragt. Somit kommt es zu keiner Verringerung des Drehmomentes infolge einer geringeren elektromagnetischen Verkopplung zwischen Stator 1 und Rotor 2. Das Lagerspiel des Axiallagers 11 kann so groß gewählt werden wie die Strecke S₁, ohne daß es zu einer Verringerung des Drehmomentes des Klauenpolschrittmotors kommt.

Stator 1, Axiallager 11 und Lagerteil 16 sind auf nicht dargestellte Weise in einem nicht dargestellten Gehäuse des Klauenpolschrittmotors angeordnet.

## Patentansprüche

1. Klauenpolschrittmotor mit einem Stator (1), der wenigstens zwei von Außenkanten (7, 8) begrenzte Statorrückschlußelemente (3, 4) aufweist, in denen jeweils wenigstens eine Statorspule (5, 6) angeordnet ist, und mit einem einen Permanentmagneten (10) aufweisenden Rotor (2), der mittels wenigstens eines Axiallagers (11) in axialer Richtung gelagert ist, wobei der Rotor (2) ein Innengewinde (12) aufweist, in dem ein Gewindebolzen (13) lagerbar ist, dadurch gekennzeichnet,
daß der Permantmagnet (10) des Rotors (2) an wenigstens einem axialen Ende (10a, 10b) über die zugeordnete Außenkante (7, 8) des Statorrückschlußelementes (3, 4) hinausragt, so daß trotz einer gegebenenfalls auftretenden Verschiebung des Rotors (2) infolge der Lagertoleranzen des Axiallagers (11) im wesentlichen das gesamte elektromagnetische Feld der Statorspulen (5, 6) mit dem Rotor (2) verkettet ist.

2. Klauenpolschrittmotor nach Anspruch 1, dadurch gekennzeichnet,
daß der Permanentmagnet (10) des Rotors (2) um wenigstens 5% der Gesamtlänge des Permantmagneten (10) des Rotors (2) über die zugeordnete Außenkante (7, 8) des Statorrückschlußelementes (3, 4) hinausragt.

3. Klauenpolschrittmotor nach Anspruch 1, dadurch gekennzeichnet,
daß der Permanentmagnet (10) des Rotors (2) an beiden axialen Enden (10a, 10b) über die zugeordnete Außenkante (7, 8) des Statorrückschlußelementes (3, 4) hinausragt.

4. Klauenpolschrittmotor nach Anspruch 3, dadurch gekennzeichnet,
daß der Permanentmagnet (10) des Rotors (2) an beiden axialen Enden (10a, 10b) um wenigstens 5% der Gesamtlänge des Permantmagneten (10) des Rotors (2) über die jeweils zugeordnete Außenkante (7, 8) des Statorrückschlußelementes (3, 4) hinausragt.

## Claims

1. A claw-pole stepper motor having a stator (1) which comprises at least two stator return elements (3, 4) bounded by outer sides (7, 8), which elements each accommodate at least one stator coil (5, 6), and having a rotor (2) which comprises a permanent magnet (10) and which is axially supported by means of at least one axial bearing (11), the rotor (2) having an inner screwthread (12) in which a threaded spindle (13) is engageable, characterized in that
the permanent magnet (10) of the rotor (2) projects from the respective outer side (7, 8) of the stator return element (3, 4) at at least one axial end (10a, 10b), in such a manner that in spite of a displacement of the rotor (2) as a result of bearing tolerances of the axial bearing (11) substantially the entire electromagnetic field of the stator coils (5, 6) is linked to the rotor (2).

2. A claw-pole stepper motor as claimed in Claim 1, characterized in that
the permanent magnet (10) of the rotor (2) projects from the respective outer side (7, 8) of the stator return element (3, 4) over at least 5 % of the overall length of the permanent magnet (10) of the rotor (2).

3. A claw-pole stepper motor as claimed in Claim 1, characterized in that
the permanent magnet (10) of the rotor (2) projects from the respective outer sides (7, 8) of the stator return element (3, 4) at both axial ends (10a, 10b).

4. A claw-pole stepper motor as claimed in Claim 3, characterized in that
the permanent magnet (10) of the rotor (2) projects from the respective outer sides (7, 8) of the stator return element (3, 4) at both axial ends (10a, 10b) over at least 5 % of the overall length of the permanent magnet (10) of the rotor (2).

## Revendications

1. Moteur pas-à-pas à pôles à griffes avec un stator (1) qui présente au moins deux éléments de fermeture de stator (3, 4) limités par les bords externes (7, 8) dans lesquels au moins une bobine de stator (5, 6) est respectivement disposée et avec un rotor (2) présentant un aimant permanent (10) qui est logé à l'aide d'au moins un palier axial (11) en direction axiale, le rotor (2) présentant un filet interne (12) dans lequel peut être logé un boulon fileté (13), caractérisé en ce que l'aimant permanent (10) du rotor (2) déborde sur au moins une extrémité axiale (10a, 10b) du bord externe (7, 8) de l'élément de fermeture du stator (3, 4) qui lui est affecté si bien que, malgré un décalage éventuel du rotor (2) en raison des tolérances de palier du palier axial (11), tout le champ électromagnétique des bobines de stator (5, 6) est essentiellement relié au rotor (2).

2. Moteur pas-à-pas à pôles à griffes selon la revendication 1, caractérisé en ce que l'aimant permanent( 10) du rotor (2) déborde d'au moins 5% de la longueur totale de l'aimant permanent (10) du rotor (2) du bord externe (7, 8) de l'élément de fermeture du stator (3, 4) qui lui est affecté.

3. Moteur pas-à-pas à pôles à griffes selon la revendication 1, caractérisé en ce que l'aimant permanent (10) du rotor (2) déborde sur ses deux extrémités axiales (10a, 10b) du bord externe (7, 8) de l'élément de fermeture du stator (3, 4) qui lui est affecté.

4. Moteur pas-à-pas à pôles à griffes selon la revendication 3, caractérisé en ce que l'aimant permanent (10) du rotor (2) déborde sur ses deux extrémités axiales (10a, 10b) d'au moins 5% de la longueur totale de l'aimant permanent (10) du rotor (2) au-delà du bord externe (7, 8) de l'élément de fermeture du stator (3, 4) qui lui est respectivement affecté.
